# EUROPEAN PATENT SPECIFICATION

(11) **EP 2 049 323 B1**
(45) Date of publication and mention of the grant of the patent: **02.05.2012**
(21) Application number: 07802564.0
(22) Date of filing: 10.08.2007
(51) Int. Cl.: B29D 11/00, B29C 33/56

(54) **PROCESS FOR MOLDING AN OPHTHALMIC LENS WITH A MOLD HAVING A PROTECTIVE COATING**
VERFAHREN ZUR HERSTELLUNG VON OPHTHALMISCHEN LINSEN MIT EINEM FORMWERKZEUG MIT EINEM SCHUTZÜBERZUG
procédé pour produire des lentilles ophtalmiques avec un moule avec revêtement de protection

(30) Priority: 11.08.2006 EP 06118815
(43) Date of publication of application: 22.04.2009
(73) Proprietor: Novartis AG, 4056 Basel (CH)
(72) Inventor: CAMPANELLI, Giovanni, 63762 Grossostheim (DE); DIETRICH, Burkhard, 40789 Monheim (DE)
(74) Representative: Bohest AG
(86) International application number: PCT/EP2007/058308
(87) International publication number: WO 2008/017716

(56) References cited:
- EP-A2- 1 245 372
- WO-A-03/095171
- WO-A-2006/034864
- US-A- 3 935 292
- US-A- 5 639 510
- US-B1- 6 565 776
- "Polysiloxanes" ENCYCLOPAEDIA BRITANNICA ONLINE, [Online] XP002416333 Retrieved from the Internet: URL:http://search.eb.com/eb/article-76490> [retrieved on 2007-01-23]

## Description

This invention is directed to improved lens molds for the production of ophthalmic lenses, in particular colored contact lenses. The invention involves protective coatings for extended use and repair of reusable glass or quartz molds as well as for improved mold release and print-on-mold properties. The invention is also directed to a method of making the improved lens molds and their use in the manufacture of ophthalmic lenses, in particular colored contact lenses.

Molds used in the manufacture of soft (hydrogel) contact lenses are either made from glass or quartz or from a variety of thermoplastic polymers. For example, EP-A-0686486 discloses mold halves made from polystyrene, polyvinyl chloride, polyethylene, polypropylene, copolymers of polystyrene with acrylonitrile and/or butadiene, acrylates such as polymethyl methacrylate, polyacrylonitrile, polycarbonate, polyamides such as nylons, polyesters, polyolefins such as polyethylene, polypropylene and copolymers thereof, polyacetal resins, polyacrylethers, polyarylether sulfones, and various fluorinated materials such as fluorinated ethylene propylene copolymers and ethylene fluoroethylene copolymers.

In general glass and quartz molds are more durable, provide higher transparency and higher dimensional stability, which allows for rapid curing of highly accurate contact lenses. However, glass and quartz molds are expensive and therefore, to be economical, have to stand a particular cycle time before being replaced to ensure quality of the contact lenses. If the molds used to make the lenses are sufficiently inexpensive, it is more economical to discard the molds after production of the lenses from the molds than it is to clean and/or repair the molds to be reused. Polypropylene is a good example of an inexpensive resin that has been used to make molds that can be discarded at minimal cost.

For all mold materials it is important that they can resist interaction with the monomers used to make the contact lenses. The ability to resist chemical interaction prevents the lens and the mold from adhering to each other and simplifies their separation following lens production.

To enhance or improve the inherent properties of the mold materials, it is known in the art to treat molds for making ophthalmic lenses, in particular contact lenses, to affect the surface properties of the molds.

EP-A-0770474 discloses hydrophilic contact lens molds which are transiently modified to provide a water dynamic contact angle equal to or less than 100° by treatment with a wetting agent which may be water or a surfactant composition.

EP-A-0740997 discloses a surface-applied surfactant in the form of a uniform layer or very thin polymeric film or transient coating to assist in the release from each other of mold components of a multi-part mold employed in the molding of hydrophilic contact lenses.

WO-A-00/76738 discloses clear-resin molds, used for making ophthalmic articles, having a permanent (nontransient), dense, uniform, and continuous protective inorganic coating on the surface of the mold, including at least the optical surfaces thereof, to prevent adverse monomer chemical interactions. Several coating techniques are described for applying such a coating, including evaporation, sputtering, spraying, and photo-chemical vapor deposition. The preferred technique for applying a protective coating to the mold employs plasma-enhanced chemical vapor deposition (PECVD). The coating, during molding of the ophthalmic article, is essentially inert or non-reactive with the lens monomers or lens surface that is formed in the mold assembly. Clear resins are disclosed to be preferably polycarbonate, polystyrene, or polyacrylate. Suitable coatings include silicon and metal oxides, carbides, and nitrides. Of these, SiOₓ, SiON, Si₃N₄,TiO₂, Ta₂O₅, and Al₂O₃ are described to be particularly effective for the molding of contact lenses employing UV curing. The applied coating can be a single-layer, single-material coating; or alternatively, the coating can also include multiple layers of different coating materials. An effective coating is typically between 10 nm and 5 µm thick.

EP-A-1245372 discloses a reusable plastic mold for producing an ophthalmic lens having a male part and a female part, wherein either the male surface, the female surface, or both surfaces are treated to have a contact angle less than 60°but greater than 0°to facilitate release of the contact lens. Preferably the surface treatment is a plasma treatment with diaminocyclohexane, vinylpyrrolidone, trimethylsilane, or a mixture of trimethylsilane and oxygen, a mixture of trimethylsilane and nitrogen or a mixture of trimethylsilane, oxygen and nitrogen.

EP-A-1225030 discloses a surface treatment of reusable glass or quartz molds exposing a mold to a high intensity UV radiation for a predetermined time to provide reusable glass or quartz molds having a constant molding quality in the manufacturing process for contact lenses.

EP-A-1332856 discloses an improved surface treatment of reusable glass or quartz molds exposing a mold to an oxygen plasma at least in the area of the shaping surface for a predetermined time to provide reusable glass or quartz molds having a constant molding quality in the manufacturing process for contact lenses.

In all above mentioned prior art documents it is the sole purpose of the surface treatment (for transiently as well as for permanently modified surfaces) to ensure constant molding quality and to facilitate release of the molded article. In particular, the above mentioned prior art proposes to provide a water dynamic contact angle of the modified surfaces (i.e. after the surface treatment) equal to or less than 100°, preferably less than 60° but greater than 0°.

It has now been found that for the manufacture of ophthalmic lenses, in particular colored contact lenses, which are manufactured with a full-mold, print-on-mold process, it is not sufficient to only provide mold surface properties to ensure constant molding quality and to facilitate release of the contact lens, but it is equally important to provide for a printable mold surface.

The invention solves this problem with the features indicated in claim 1. As far as further essential refinements are concerned, reference is made to the dependent claims.

WO-A-2006/034864 discloses a print-on-mold process for manufacturing ophthalmic lenses by using a glass or quartz mold.

### Description of the drawings

FIG. 1 shows an initial mold coating according to the invention
FIG. 2 shows a repair mold coating according to the invention

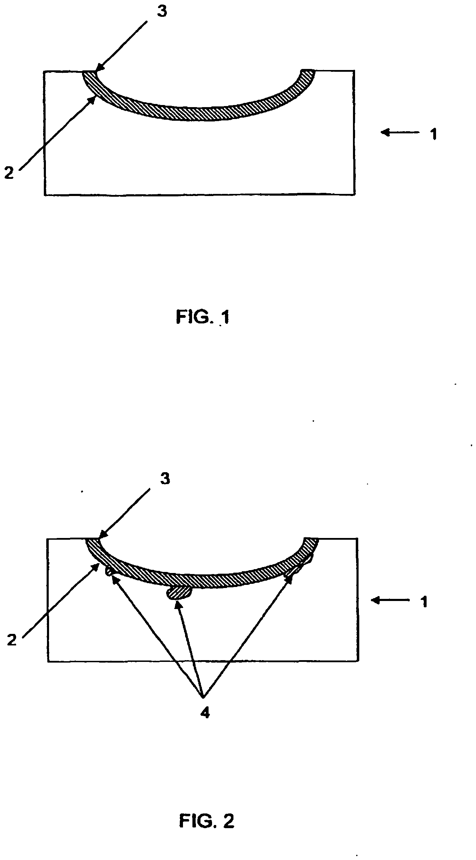

In FIG. 1 a female mold half 1 (as one part of a mold assembly) is shown, where on the cavity surface 2 a protective inorganic coating 3 has been externally applied and permanently affixed.

In FIG. 2, a similar protective inorganic coating 3 has been externally applied and permanently affixed to the cavity surface 2 of a female mold half, which (e.g. after a prolonged use in the lens manufacturing cycle) showed defects 4, such as scratches, cracks, holes or roughness on or in the cavity surface 2.

Contact lenses can be manufactured economically in large numbers by the so-called mold or full-mold process. In the molding process, an ophthalmic lens is manufactured into a final form between male and female mold halves, e.g. as described in EP-A-0367513. An ophthalmic lens produced from said process typically has little mechanical stability and a water content of more than 60 % by weight. The geometry of the ophthalmic lens is specifically defined by the cavity between the male and female mold halves. The geometry of the edge of the ophthalmic lens is defined by the contour of the two mold halves in the area where they make contact.

For manufacturing colored ophthalmic lenses, in particular colored contact lenses, print-on-mold process are known in the art, e.g. PCT/EP2006/002420.

In a first step a colored image is provided on a cliché from which it is transferred to a pad, from which it is printed on the molding surface of the female mold half. Optionally, the printed image can be cured through exposure of the female mold half to radiation, typically UV light. In a second step, a predetermined amount of a polymeric or prepolymeric material is placed in the female mold half and the mold is closed with the male mold half to create a cavity having a desired size and shape for an ophthalmic lens. Usually, a surplus of polymeric material is used so that when the male and female halves of the mold are closed, the excess amount of the material is expelled out into an overflow area adjacent to the mold cavity. In a third step, the polymer material remaining within the mold is polymerized or cross-linked through exposure of the polymer or prepolymer to radiation, typically UV light. In a fourth step, the mold is opened and the so formed ophthalmic lens is released from the mold halves and transferred for further processing. Because of the water-soluble nature of the polymeric material, the non-crosslinked prepolymer and other residues can be removed rapidly and effectively with water after the ophthalmic lens has been produced in the mold. Finally, the molds are air-dried and reused.

Several problems arise when molds for making ophthalmic lenses are reused. One problem is called "bubbling". Bubbles can form at the interface between the mold surface and the lens material when the lens material does not have a good wettability of the mold surface, i.e. when the lens material does not spread evenly over the mold surface. Good wettability (for water soluble prepolymers used as lens forming material) can be generally defined by the water dynamic contact angle being equal to or less than 100°.

Another problem is called "sticking". Sticking means that the lens adheres to the inner surface of the mold cavity, requiring excessive force to open the mold and to release the ophthalmic lens therefrom. The excessive force can result in damage to the lens. As the lens forming material is cured, it is important for the cavity surface to be non-reactive with the water soluble prepolymers used as lens forming material under curing conditions.

A problem in particular related to the manufacture of colored (i.e. printed) ophthalmic lenses is the so called "no print". This problem may either result form the fact that in the print-on-mold process, the print is not transferred to the mold or the print is transferred to the mold, but does not adhere to the ophthalmic lens. Both defects will be rejected in the manufacture as so called "no print".

It is therefore the primary object of the present invention to provide a process for producing ophthalmic lenses, and preferably colored contact lenses, which ensures constant molding quality, facilitates the removal of the finished lens from the mold and which allows for good print-on-mold properties. The chemical structure of the surface of the mold cavity is changed so that the surface becomes non-reactive with the lens forming material under curing conditions, which interacts with the lens forming material to reduce bubbling and stickiness and which, at the same time, improves the print-on-mold properties.

A mold assembly for the manufacture of at least one ophthalmic lens, in particular a contact lens, is disclosed, which mold assembly comprises a mateable pair of mold parts made from glass or quartz wherein at least one of the cavity surfaces of the mold parts comprises a coating of an inorganic material to protect the mold parts from attack by monomer or prepolymer used in making the ophthalmic lens, which protective coating is externally applied and permanently affixed to the cavity surfaces of the mold assembly.

Preferably the at least one of the cavity surfaces of the mold parts is the cavity surface of the female mold part.

A mold assembly comprising a mateable pair of mold parts made from glass or quartz may comprise both, male and female mold part made from glass, both, male and female mold part made from quartz, or the one mold part made from glass and the other made from quartz. Preferably, the female mold part is made from glass and the male mold part is made from quartz for higher UV transmission.

The protective coating may be applied to the cavity surface of both mold parts or only to one of the cavity surfaces. Preferably the protective coating is applied to the cavity surface of the mold part made from glass. More preferably the protective coating is applied to the female mold part, most preferably to a female mold part made from glass.

Most preferably the male mold part is made from quartz, whereas the female mold part is made from glass with a protective coating applied to the cavity surface of the female mold part.

The protective coating is preferably uniform and continuous. The protective coating preferably has a thickness from 10 nm to 1 µm, more preferably from 15 nm to 100 nm and most preferably from 20 nm to 50 nm.

The protective coating provides for a water dynamic contact angle of from 60° to 100°, preferably from 75° to 85°, most preferably around 80° (with "around" being ± 2°, according to the Standard Deviation at measurement).

Preferably, the protective coating comprises silicon oxide (SiO₂) in an amount from at least 20 at% (Si), more preferably at least 25 at% (Si), most preferably at least 30 at% (Si).

The water dynamic contact angle is preferably measured using the Sessile drop method, typically using a Kruss^{™} G 40 system and water of surface tension 71,35 mN/m. The contact angle measurements are typically performed 30, 60, 90, 120 and 150 seconds after the drop is placed on the sample sheet. With those values an extrapolation for the contact angle at t=0 seconds is performed. The mean value of the sample sheet is calculated by five of these extrapolated values.
In addition, the protective coating should be uniform over the surface of the mold, completely covering the mold surface. The uniformity of the surface can for example be measured using the Wihelmy method, typically using a Kruss^{™} K121 system at 20° C.

The process according to the invention comprises the steps of:
(a) permanently affixing a protective coating of an inorganic material to at least one of the cavity surfaces of a quartz or glass mold assembly;
(b) printing on the at least one coated surface of the quartz or glass mold;
(c) optionally curing the print by irradiation with UV-light;
(d) introducing an aqueous solution comprising a water soluble prepolymer having crosslinkable groups into the mold;
(e) initiating of crosslinking by irradiation with UV-light;
(f) releasing the molding from the mold, and
(g) washing and drying the mold.

In a preferred embodiment, the process comprises the steps of:
(a) applying to at least one surface of the quartz or glass mold assembly the uniform and continuous protective coating using a two step plasma treatment;
(b) printing on the at least one coated surface of the quartz or glass mold using pad transfer printing;
(c) optionally curing the print by irradiation with UV-light;
(d) introducing the aqueous solution comprising a water soluble prepolymer having crosslinkable groups into the mold;
(e) initiating of crosslinking by irradiation with UV-light;
(f) releasing the molding from the mold, and
(g) washing and drying the mold.

In a preferred embodiment of each of the above described processes, the steps (b) to (g) are repeated in a cycle.

The permanently affixing of a protective coating of an inorganic material is preferably done by treating a male cavity surfaces or female cavity surfaces of a reusable quartz or glass mold with a plasma. In a preferred embodiment, the plasma treatment is performed with a device and process as described in EP-A-1332856.
The molds or mold halves are assembled in a carrier plate and cleaned with compressed air. The carrier plate is then introduced into the plasma oven. The (metal) carrier plate forms one of the two electrodes between which the plasma is ignited. The treatment chamber comprising the carrier plate with the molds or mold halves is evacuated.
In a first treatment step, the molds or mold halves are pretreated with an oxygen plasma for 1 to 10 minutes, preferably 2 to 5 minutes, most preferably 3 minutes.
In a second treatment step, the molds or mold halves are treated with a silane monomer plasma for 1 to 20 minutes, preferably 5 to 15 minutes, most preferably 10 minutes.

The plasma coating can be formed from silane monomers, such as trimethylsilane or tetramethylsilane, preferably tetramethylsilane. Preferably the silane monomer plasma is a mixed oxygen / silane monomer plasma, most preferably an oxygen / tetramethylsilane plasma.

In an alternative method, the male cavity surface or female cavity surface of a reusable quartz or glass mold is contacted with a silicone pad for several hours and subsequently the contacted surface is cured using UV-light to form a permanent protective coating.

In the alternative method, the permanently affixing is a process comprising the following steps:
- providing a silicone pad, which preferably is made from polydimethylsiloxane;
- contacting the silicone pad with the cavity surface of the mold half to be coated for a time from 1 to 10 days, preferably 24 to 72 h, with a defined pressure from 1 to 5 bar, preferably 1,5 to 3 bar, more preferably 1,6 to 2,4 bar;
- curing the coating by irradiation with UV light.

For a diameter of the cavity surface of the female mold half of 15 mm, the defined pressure applied to the silicone pad corresponds to a weight of 10 to 15 kg. The irradiation with UV light is typically 1 h or more.

Both methods, the two step plasma treatment as well as the alternative method can either be applied for an initial coating of a mold cavity surface (i.e. before use of the mold in production) or for a repair coating (i.e. after use of the mold in production). It is to be pointed out, that with the plasma coating method the applied coating is in general more uniform and continuous, as well as that with the plasma coating method the applied thickness of the coating is better defined. With the alternative method it is in general more difficult to apply a uniform and continuous coating with a thickness of more than 15 nm to the cavity surface.

The printing on the at least one coated surface of the quartz or glass mold is preferably a pad transfer printing, wherein a printing ink comprising from 80 to 98%, preferably 85 to 95%, most preferably 87 to 93% of a water soluble prepolymer having crosslinkable groups as defined below and 2 to 20%, preferably 5 to 15%, most preferably 7 to 13% of a pigment or a combination of pigments is used.

The aqueous solution comprising a water soluble prepolymer having crosslinkable groups preferably is a derivative of a polyvinyl alcohol having a molecular weight of at least 200 that, based on the number of hydroxyl groups of the polyvinyl alcohol, comprises from approximately 0.5% to approximately 80% of units of formula 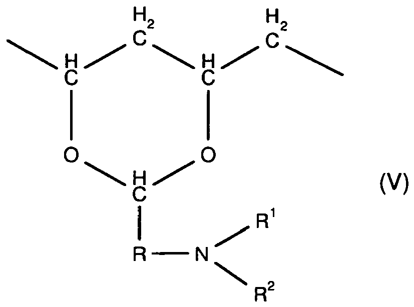 wherein R is C₁-C₈-alkylene, R¹ is hydrogen or C₁-C₇-alkyl and R² is an olefinically unsaturated, electron-attracting, copolymerizable radical, preferably having up to 25 carbon atom.
More preferably in the units of formula (V), R is methylene, R¹ is hydrogen and R² is acryloyl.

Preferred printing inks are prepared by combining a Nelfilcon solution (30% Nelfilcon and 70% water, wherein Nelfilcon is an acrylated-poly(vinyl alchohol) as defined above, from Ciba Vision Corporation, Atlanta, US), a surfactant (e.g. Surfynol^{®}420 from Air Products, Allentown, PA, USA), and a photo initiator (e.g. Irgacure^{®} 2959 from Ciba Speciality Chemicals, Basel, Switzerland) with various pigments, e.g. from 0 to 10% titanium dioxide; from 0 to 2% phthalocyanine blue (PCN blue); from 0 to 0.5% phthalocyanine green (PCN green); from 0 to 8% yellow iron oxide; from 0 to 6% red iron oxide; from 0 to 12% chromium oxide; from 0 to 15% black iron oxide. Each printing ink comprises from 0.05% to 0.15% by weight of Surfynol^{®}420. Each ink further comprises from 0.70% to 1.4% by weight of Irgacure^{®} 2959. The ratio is selected depending upon the desired color hue, surfactant level, and initiator level. For example, a red ink could be made by using a high level of red iron oxide and a low levels of the other pigments. The amount of the Nelfilcon solution is varied in % by weight accordingly to achieve 100% values.

Preferably, the mold assembly will withstand at least 10 manufacturing cycles, more preferably at least 100, most preferably at least 1000 cycles or more.

### Examples

### Example 1

In a mold assembly with a male mold half made from quartz and a female mold half made from glass, a new but uncoated female glass mold was compared to a female glass mold whereon a coating was permanently affixed according to the following procedure:
A silicone pad made from polydimethylsiloxane was contacted with the cavity surface of the female mold half for 72 h under a weight of 10-15 kg (which for a diameter of the cavity surface of 15 mm corresponds to a pressure of 1,6-2,4 bar). After contacting the cavity surface with the silicone pad, the coated surface was cured using UV-light for 1 h.
The surface of the two female mold halfs was analyzed using Electron Spectroscopy for Chemical Analysis (ESCA) with monochromatic Al-Kα radiation in an area of 0,8 mm diameter at the center or close to the center of the female mold half.
To determine the thickness of the coating and to determine the composition of the coating of the mold material underneath, the surface was sputtered away at a rate of 2,5 nm/min using a focused 3 keV Ar ion beam (diameter 200 µm). The composition for each layer was determined using ESCA as above.

The female mold halves were made from glass called BK7 (which is commercially available from the company Glaswerke Schott, Mainz, Germany).

For the new but uncoated female glass mold it has been found that it was covered by a significant organic overlayer.
For the coated female glass mold after curing it has been found, that the cavity surface was coated with a SiO₂ layer of a thickness from 8-12 nm with 25 at% (Si).

Both female mold halves were subsequently used in the production of colored contact lenses.

The water soluble prepolymer having crosslinkable groups, i.e. the lens material, was an aqueous solution of Nelfilcon (30% by weight of Nelfilcon and 70% by weight of water, wherein Nelfilcon is an acrylated poly(vinyl-alcohol) from Ciba Vision Corp., Atlanta, US).

In the pad transfer printing, printing inks with the following composition were used (alone or in combination, i.e. by subsequent printing):
80 to 90% of an aqueous solution of Nelfilcon (30% by weight of Nelfilcon and 70% by weight of water) were mixed with a pigment or a combination of pigments selected from the following table:

| Color | Pigment | | | | particle size (max. in µm) | available from |
|---|---|---|---|---|---|---|
| | | L* | a* | b* | | |
| White | Titan Dioxide | 97.57 | -0.10 | 1.31 | 5 | Nordmann |
| Black | Iron Oxide Black | 21.88 | 3.45 | 3.63 | 5 | Nordmann |
| Red | Iron Oxide Red | 31.89 | 29.8 | 22.31 | 5 | Goldmann |
| Yellow | Iron Oxide Yellow | 70.54 | 14.47 | 58.45 | 5 | Nordmann |
| Green | Chrome Oxide Green | 46.42 | -18.35 | 21.33 | 5 | Goldmann |
| Green | Phthalocyanine Green | 25.21 | -43.85 | -3.10 | 5 | Noveon |
| Blue | Phthalocyanine Blue | 17.88 | 13.93 | -37.41 | 5 | Nordmann |

The following basic colors were provided as printing inks for colored contact lenses (each composition comprising 0.1% by weight of Surfynol^{®}420 and 1.0% by weight of Irgacure^{®} 2959, total: 1,1%):

| Basic color | Pigment | Pigment content in % | Nelfilcon content in % | Viscosity (max. in mPas) |
|---|---|---|---|---|
| Black | Iron Oxide Black | 15.00 | | |
| | Total | 15.00 | 83.9 | 3700 |

| Basic color | Pigment | Pigment content in % | Nelfilcon content in % | Viscosity (max. in mPas) |
|---|---|---|---|---|
| Hazel | Titan Dioxide | 0.76 | | |
| | Iron Oxide Red | 3.21 | | |
| | Iron Oxide Yellow | 4.55 | | |
| | Phthalocyanine Blue | 0.08 | | |
| | Total | 8.60 | 90.3 | 4500 |

| Basic color | Pigment | Pigment content in % | Nelfilcon content in % | Viscosity (max. in mPas) |
|---|---|---|---|---|
| Cinnamon | Titan Dioxide | 1.00 | | |
| | Iron Oxide Red | 4.20 | | |
| | Iron Oxide Yellow | 6.00 | | |
| | Phthalocyanine Blue | 0.10 | | |
| | Total | 11.30 | 87.6 | 4500 |

| Basic color | Pigment | Pigment content in % | Nelfilcon content in % | Viscosity (max. in mPas) |
|---|---|---|---|---|
| Beige | Iron Oxide Yellow | 4.90 | | |
| | Total | 4.90 | 95.0 | 3500 |

| Basic color | Pigment | Pigment content in % | Nelfilcon content in % | Viscosity (max. in mPas) |
|---|---|---|---|---|
| Blue | Titan Dioxide | 4.20 | | |
| | Phthalocyanine Blue | 1.10 | | |
| | Total | 5.30 | 93.6 | 3000 |

| Basic color | Pigment | Pigment content in % | Nelfilcon content in % | Viscosity (max. in mPas) |
|---|---|---|---|---|
| Green | Chrome Oxide Green | 8.80 | | |
| | Phthalocyanine Blue | 0.10 | | |
| | Total | 8.90 | 90.0 | 3000 |

| Basic color | Pigment | Pigment content in % | Nelfilcon content in % | Viscosity (max. in mPas) |
|---|---|---|---|---|
| Gray | Titan Dioxide | 6.55 | | |
| | Iron Oxide Black | 3.23 | | |
| | Phthalocyanine Green | 0.02 | | |
| | Total | 9.80 | 89.1 | 3400 |

The process for the production of colored contact lenses can be described as follows: In a first step a colored image was provided on a cliché from which it was transferred to a pad, from which it was printed on the molding surface of the female mold half. The printed image was cured through exposure of the female mold half to UV light under a Hamamatsu lamp with a fiber optic probe. No cut-off filter was used. The light was passed through a condenser (f=22.5 mm), with a distance 40 mm from the condenser to the mold. UVB light between 5 and 7 mW/cm² was used for 2 seconds, as measured by a Groebel detector. In a second step, a predetermined amount of a Nelfilcon solution containing about 30% Nelfilcon, about 70% water and 0.1% Irgacure^{®} 2959 was dispensed onto the printed female mold half. The female mold half was allowed to sit for 10 seconds before mating it with the corresponding male mold half and closing the mold with a pneumatic closing system. In a third step, the Nelfilcon solution was UV cured for 5 seconds with a Dr. Groebel lamp, with a 305 nm (50% transmission) cut-off filter installed in the condenser. In a fourth step, the mold was opened and the so formed colored contact lens was released from the mold halves and transferred for further processing.
Finally, the molds were air-dried and reused.

For the new but uncoated female glass mold, the molding results were in general less consistent and about 30% of all lenses produced were rejected due to "no print".
For the coated female glass mold, the molding results were of constant molding quality with less than 10% of all lenses produced being rejected due to "no print". The surface quality of the lenses were "good" to "average", indicating that the protective coating is not as uniform and continuous as in example 2 (see below).

### Example 2

In a further mold assembly with a male mold half made from quartz and a female mold half made from glass, a female glass mold was applied whereon a coating was permanently affixed according to the following procedure:

In a plasma treatment installation of the type PlasmPrep 5 (available from Gala Labor Instrumente GmbH, Bad Schwalbach, Germany) an oxygen and tetramethylsilane plasma were applied in a two step process:

The female mold halves were assembled in a carrier plate and cleaned with compressed air. The carrier plate was then introduced into the plasma oven. The (metal) carrier plate forms one of the two electrodes between which the plasma is ignited.
The treatment chamber comprising the carrier plate with the female mold halves was evacuated to a pressure below 0.5 mbar. Then the oxygen was supplied to the treatment chamber and it was further evacuated to a pressure below 0.22 mbar.
Then, the plasma was ignited and the female mold halves were pretreated with an oxygen plasma for 3 minutes (with a bluish light in the treatment chamber).
Subsequently, the treatment chamber was flushed with Argon gas for 10 minutes to a pressure between 0.76 to 0.88 mbar in the treatment chamber.
In a second treatment step, oxygen and tetramethylsilane were supplied to the treatment chamber, the plasma was ignited again and the molds or mold halves were treated with an oxygen / tetramethylsilane plasma for 10 minutes at a pressure between 1.5 to 1.8 mbar in the treatment chamber.
After the treatment, the female mold halves were removed form the carrier plate and reassembled into the production tooling.

The surface of the female mold half was analyzed using Electron Spectroscopy for Chemical Analysis (ESCA) with monochromatic Al-Kα radiation in an area of 0,8 mm diameter at the center or close to the center of the female mold half.
To determine the thickness of the coating and to determine the composition of the coating or the mold material underneath, the surface was sputtered away using a focused 3 keV Ar ion beam (diameter 200 µm) at a rate of 2,5 nm/min. The composition for each layer was determined using ESCA as above.

For the plasma coated female glass mold it has been found, that the cavity surface was coated with a SiO₂ layer of a thickness from 36-40 nm with 30-32 at% (Si).

For the plasma coated female glass mold, the water dynamic contact angle was determined to be 81 ° (n = 4 measurements with a Standard Deviation of 2°).

The water dynamic contact angle was measured with a Kruss^{™} G 40 system using the Sessile drop method. The water surface tension was 71,35 mN/m. The contact angle measurements were performed 30, 60, 90, 120 and 150 seconds after the drop was placed on the sample mold. With those values an extrapolation for the contact angle at t=0 seconds was performed. The mean value was calculated by n of these extrapolated values.

The plasma coated female glass mold was subsequently used in the production of colored contact lenses.

For the water soluble prepolymer having crosslinkable groups, i.e. the lens material, and for the printing inks as well as for the production process see Example 1.

For the plasma coated female glass mold, the molding results were of constant molding quality with less than 5% of all lenses produced being rejected due to "no print". The surface quality of the lenses were "very good" to "good", indicating that the protective coating is uniform and continuous.

The lens mold was further evaluated with ESCA after 8 weeks in production. The SiO₂ coating still indicates a protective coating of 35 nm thickness with 30-32 at% (Si) and the mold properties in production were reported to be "good".

In the production of printed contact lenses, the rejection criteria "no print" could be almost eliminated, which increased the overall yield of the lens manufacturing process from 60-80% to 90-95%.

The mold assembly and the process according to the invention thus represent an economic advantage in the manufacture of high quality colored ophthalmic lenses, as commercial grade lenses can be consistently produced in a reusable mold with minimal defects due to removal of the lens from the mold and with minimal rejections due to "no print".

## Claims

1. A process for the manufacture of an ophthalmic lens, comprising the steps:
(a) permanently affixing a protective coating (3) of an inorganic material to at least one of the cavity surfaces (2) of a quartz or glass mold assembly;
(b) printing on the at least one coated surface of the quartz or glass mold;
(c) optionally curing the print by irradiation with UV-light;
(d) introducing an aqueous solution comprising a water soluble prepolymer having crosslinkable groups into the mold;
(e) initiating of crosslinking by irradiation with UV-light;
(f) releasing the ophthalmic lens from the mold, and
(g) washing and drying the mold.

2. The process of claim 1, wherein the permanently affixing (a) is a process comprising the following steps:
- providing a silicone pad;
- contacting the silicone pad with the cavity surface (2) of the mold half (1) to be coated for a time from 1 to 10 days, preferably 24 to 72 h, with a defined pressure from 1 to 5 bar, preferably 1,5 to 3 bar, more preferably 1,6 to 2,4 bar;
- curing the coating by irradiation with UV light.

3. The process of claim 2, wherein the silicone pad is made from polydimethylsiloxane.

4. The process of claim 1, wherein the permanently affixing (a) is a two step plasma treatment comprising the following steps:
- treating the at least one of the cavity surfaces (2) of a quartz or glass mold assembly with an oxygen plasma; and
- treating the at least one of the cavity surfaces (2) of a quartz or glass mold assembly with a silane monomer plasma.

5. The process of claim 4, wherein the silane monomer plasma is a mixed oxygen / tetramethylsilane plasma.

6. The process of claim 1, comprising the steps:
(a) applying to at least one surface of the quartz or glass mold assembly the uniform and continuous protective coating (3) using a two step plasma treatment;
(b) printing on the at least one coated surface (2) of the quartz or glass mold using pad transfer printing;
(c) optionally curing the print by irradiation with UV-light;
(d) introducing the aqueous solution comprising a water soluble prepolymer having crosslinkable groups into the mold;
(e) initiating of crosslinking by irradiation with UV-light;
(f) releasing the ophthalmic lens form the mold, and
(g) washing and drying the mold.

7. The process of any one of claims 1 to 6, wherein the at least one of the cavity surfaces (2) of the mold parts is the cavity surface of the female mold part made from glass.

8. The process of any one of claims 1 to 6, wherein the water soluble prepolymer having crosslinkable groups is a derivative of a polyvinyl alcohol having a molecular weight of at least 200 that, based on the number of hydroxyl groups of the polyvinyl alcohol, comprises from approximately 0.5% to approximately 80% of units of formula 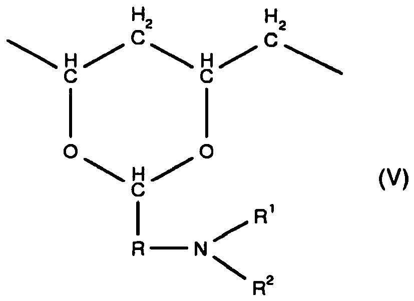 wherein R is C₁-C₈-alkylene, R¹ is hydrogen or C₁-C₇-alkyl and R² is an olefinically unsaturated, electron-attracting, copolymerizable radical, preferably having up to 25 carbon atom.

9. The process according to claim 8, wherein in the units of formula (V), R is methylene, R¹ is hydrogen and R² is acryloyl.

10. The process of claim 6, wherein in the pad transfer printing a printing ink comprising from 80 to 98%, preferably 85 to 95%, most preferably 87 to 93% of a water soluble prepolymer having crosslinkable groups is used being a derivative of a polyvinyl alcohol having a molecular weight of at least 200 that, based on the number of hydroxyl groups of the polyvinyl alcohol, comprises from approximately 0.5% to approximately 80% of units of formula 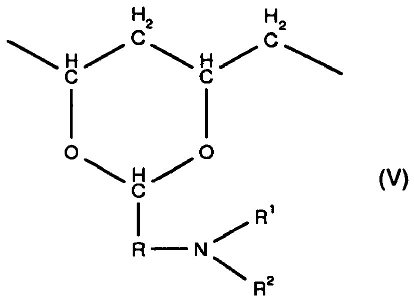 wherein R is C₁-C₈-alkylene, R¹ is hydrogen or C₁-C₇-alkyl and R² is an olefinically unsaturated, electron-attracting, copolymerizable radical, preferably having up to 25 carbon atoms;
and wherein the printing ink is further comprising 2 to 20%, preferably 5 to 15%, most preferably 7 to 13% of a pigment or a combination of pigments.

11. The process according to claim 1, wherein the steps (b) to (g) are repeated in a cycle.

12. The process according to claim 1, wherein the ophthalmic lens is a contact lens.

## Patentansprüche

1. Verfahren zur Herstellung einer ophthalmischen Linse, umfassend die Schritte:
(a) dauerhaftes Befestigen eines Schutzüberzugs (3) aus einem anorganischen Material auf mindestens einer der Hohlraumoberflächen (2) eines Quarz- oder Glas-Formwerkzeugs;
(b) Drucken auf die mindestens eine beschichtete Oberfläche der Quarz- oder Glas Form;
(c) wahlweise Härten des Drucks durch Bestrahlung mit UV-Licht;
(d) Einbringen einer wässrigen Lösung enthaltend ein wasserlösliches Präpolymer mit vernetzbaren Gruppen in die Form;
(e) Auslösen der Vernetzung durch Bestrahlung mit UV-Licht;
(f) Entfernen der ophthalmischen Linse aus der Form, und
(g) Waschen und Trocknen der Form.

2. Verfahren gemäss Anspruch 1, wobei das dauerhafte Befestigen (a) ein Verfahren ist das die folgenden Schritte umfasst:
- Bereitstellen eines Silikontampons;
- Kontaktieren des Silikontampons mit der Hohlraumoberfläche (2) der zu beschichtenden Formhälfte (1) für eine Zeit von 1 bis 10 Tagen, vorzugsweise 24 bis 72 h, mit einem definierten Druck von 1 bis 5 bar, vorzugsweise 1,5 bis 3 bar, bevorzugter 1,6 bis 2,4 bar;
- Härten des Überzugs durch Bestrahlung mit UV-Licht.

3. Verfahren gemäss Anspruch 2, wobei der Silikontampon aus Polydimethylsiloxan gefertigt ist.

4. Verfahren gemäss Anspruch 1, wobei das dauerhafte Befestigen (a) eine zweistufige Plasmabehandlung ist die folgende Schritte umfasst:
- Behandeln der mindestens einen der Hohlraumoberflächen (2) eines Quarz- oder Glas-Formwerkzeugs mit einem Sauerstoffplasma; und
- Behandeln der mindestens einen der Hohlraumoberflächen (2) eines Quarz- oder Glas-Formwerkzeugs mit einem Silanmonomer-Plasma.

5. Verfahren gemäss Anspruch 4, wobei das Silanmonomer-Plasma ein gemischtes Sauerstoff-Tetramethylsilan-Plasma ist.

6. Verfahren gemäss Anspruch 1, umfassend die Schritte:
(a) Aufbringen des einheitlichen und durchgehenden Schutzüberzugs (3) auf mindestens eine Oberfläche des Quarz- oder Glas-Formwerkzeugs mittels einer zweistufigen Plasmabehandlung;
(b) Drucken auf die mindestens eine beschichtete Oberfläche (2) der Quarz- oder Glass-Form unter Verwendung von Tampon-Transferdruck;
(c) wahlweise Härten des Drucks durch Bestrahlung mit UV-Licht;
(d) Einbringen der wässrigen Lösung enthaltend ein wasserlösliches Präpolymer mit vernetzbaren Gruppen in die Form;
(e) Auslösen der Vernetzung durch Bestrahlung mit UV-Licht;
(f) Entfernen der ophthalmischen Linse aus der Form, und
(g) Waschen und Trocknen der Form.

7. Verfahren gemäss einem der Ansprüche 1 bis 6, wobei die mindestens eine der Hohlraumoberflächen (2) des Formteils die Hohlraumoberfläche des aus Glas gefertigten weiblichen Formteils ist.

8. Verfahren gemäss einem der Ansprüche 1 bis 6, wobei das wasserlösliche Präpolymer mit vernetzbaren Gruppen ein Derivat eines Polyvinylalkohols mit einem Molekulargewicht von mindestens 200 ist das, basierend auf der Zahl an Hydroxygruppen des Polyvinylalkohols, von ungefähr 0.5% bis ungefähr 80% Einheiten der Formel 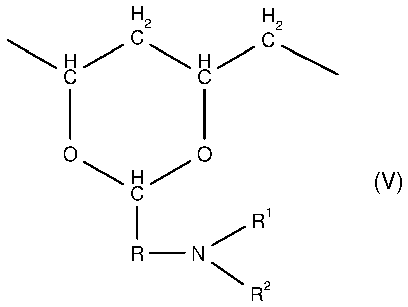 enthält,
wobei R C₁-C₈-Alkylen ist, R¹ Wasserstoff oder C₁-C₇-Alky ist und R² ein olefinischungesättigtes, Elektronen-anziehendes, copolymerisierbares Radikal mit vorzugsweise bis zu 25 Kohlenstoffatomen ist;

9. Verfahren gemäss Anspruch 8, wobei in den Einheiten der Formel (V), R Methylen ist, R¹ Wasserstoff und R² Acryloyl ist.

10. Verfahren gemäss Anspruch 6, wobei beim Tampon-Transferdruck eine Drucktinte verwendet wird die von 80 bis 98%, vorzugsweise 85 bis 95%, am bevorzugtesten 87 bis 93% eines wasserlöslichen Präpolymers mit vernetzbaren Gruppen enthält, welches ein Derivat eines Polyvinylalkohols mit einem Molekulargewicht von mindestens 200 ist das, basierend auf der Zahl an Hydroxygruppen des Polyvinylalkohols, von ungefähr 0.5% bis ungefähr 80% Einheiten der Formel 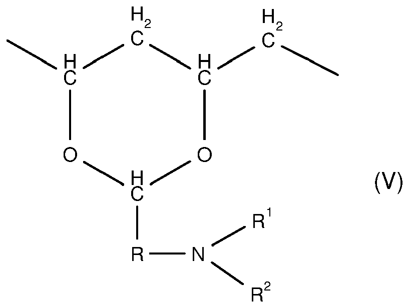 enthält,
wobei R C₁-C₈-Alkylen ist, R¹ Wasserstoff oder C₁-C₇-Alky ist und R² ein olefinischungesättigtes, Elektronen-anziehendes, copolymerisierbares Radikal mit vorzugsweise bis zu 25 Kohlenstoffatomen ist;
und wobei die Drucktinte ferner 2 bis 20%, vorzugsweise 5 bis 15%, am bevorzugtesten 7 bis 13% eines Pigments oder einer Kombination von Pigmenten enthält.

11. Verfahren gemäss Anspruch 1, wobei die Schritte (b) bis (g) in einem Zyklus wiederholt werden.

12. Verfahren gemäss Anspruch 1, wobei die ophthalmische Linse eine Kontaktlinse ist.

## Revendications

1. Procédé de fabrication d'une lentille ophtalmique, comprenant les étapes consistant à :
(a) apposer de façon permanente un revêtement protecteur (3) d'un matériau inorganique sur au moins l'une des surfaces de cavité (2) d'un ensemble de moule en quartz ou en verre ;
(b) imprimer sur la surface revêtue, au moins au nombre de une, du moule de quartz ou de verre ;
(c) en option durcir l'impression par exposition aux rayonnements de la lumière UV ;
(d) introduire dans le moule une solution aqueuse comprenant un prépolymère soluble dans l'eau et présentant des groupes réticulables ;
(e) initier la réticulation par exposition aux rayonnements de la lumière UV ;
(f) retirer la lentille ophtalmique du moule ; et
(g) laver et sécher le moule.

2. Procédé selon la revendication 1, dans lequel l'apposition permanente (a) est un procédé comprenant les étapes suivantes :
- fournir un tampon de silicone ;
- mettre le tampon de silicone en contact avec la surface de cavité (2) du demi-moule (1) à revêtir pendant une durée comprise entre 1 et 10 jours, de préférence entre 24 et 72 h, sous une pression définie comprise entre 1 et 5 bar, de préférence entre 1,5 et 3 bar, de façon plus préférentielle entre 1,6 et 2,4 bar ;
- durcir le revêtement par exposition aux rayonnements de la lumière UV.

3. Procédé selon la revendication 2, dans lequel le tampon de silicone est fabriqué à partir de polydiméthylsiloxane.

4. Procédé selon la revendication 1, dans lequel l'apposition permanente (a) est un traitement au plasma en deux étapes comprenant les étapes suivantes :
- traiter les surfaces de cavité (2), au moins au nombre de une, de l'ensemble de moule en quartz ou en verre avec un plasma à l'oxygène ; et
- traiter les surfaces de cavité (2), au moins au nombre de une, de l'ensemble de moule en quartz ou en verre avec un plasma au monomère de silane.

5. Procédé selon la revendication 4, dans lequel le plasma au monomère de silane est un plasma mixte oxygène / tétraméthylsilane.

6. Procédé selon la revendication 1, comprenant les étapes consistant à :
(a) appliquer sur au moins une surface de l'ensemble de moule en quartz ou en verre le revêtement protecteur uniforme et continu (3) en utilisant un traitement au plasma en deux étapes ;
(b) imprimer sur la surface revêtue (2), au moins au nombre de une, du moule de quartz ou de verre en utilisant une impression par transfert sur tampon ;
(c) en option durcir l'impression par exposition aux rayonnements de la lumière UV ;
(d) introduire dans le moule une solution aqueuse comprenant un prépolymère soluble dans l'eau et présentant des groupes réticulables ;
(e) initier la réticulation par exposition aux rayonnements de la lumière UV ;
(f) retirer la lentille ophtalmique du moule ; et
(g) laver et sécher le moule.

7. Procédé selon l'une quelconque des revendications 1 à 6, dans lequel les surfaces de cavité (2), au moins au nombre de une, des parties de moule sont la surface de cavité de la partie de moule femelle fabriquée à partir de verre.

8. Procédé selon l'une quelconque des revendications 1 à 6, dans lequel le prépolymère soluble dans l'eau et présentant des groupes réticulables est un dérivé d'un alcool de polyvinyle présentant un poids moléculaire au moins égal à 200 qui, sur la base du nombre de groupes hydroxyle de l'alcool de polyvinyle, comprend environ 0,5 % à environ 80 % de motifs de formule 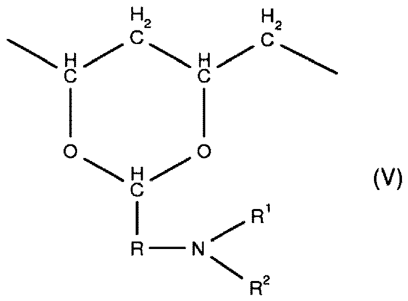 dans laquelle R est un groupe alkylène en C₁-C₈, R¹ est l'hydrogène ou un groupe alkyle en C₁-C₇ et R² est un radical copolymérisable, insaturé en oléfine et à attraction d'électrons, comportant de préférence jusqu'à 25 atomes de carbone.

9. Procédé selon la revendication 8, dans lequel dans les motifs de formule (V), R représente le méthylène, R¹ est l'hydrogène et R² est un acryloyle.

10. Procédé selon la revendication 6, dans lequel dans l'impression par transfert sur tampon, on utilise une encre d'impression comprenant 80 à 98 %, de préférence 85 à 95 %, de façon la plus préférentielle 87 à 93 % d'un prépolymère soluble dans l'eau présentant des groupes réticulables, qui est un dérivé d'un alcool de polyvinyle présentant une masse moléculaire au moins égale à 200 et qui, sur la base du nombre de groupes hydroxyle de l'alcool de polyvinyle, comprend environ 0,5 % à environ 80 % de motifs de formule 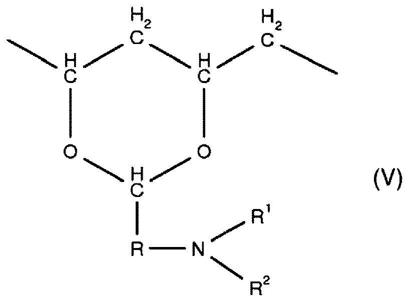 dans laquelle R est un groupe alkylène en C₁-C₈, R¹ est l'hydrogène ou un groupe alkyle en C₁-C₇ et R² est un radical copolymérisable, insaturé en oléfine et à attraction d'électrons, comportant de préférence jusqu'à 25 atomes de carbone ;
et dans lequel l'encre d'impression comprend en outre 2 à 20 %, de préférence 5 à 15 %, de façon la plus préférentielle 7 à 13 %, d'un pigment ou d'une combinaison de pigments.

11. Procédé selon la revendication 1, dans lequel les étapes (b) à (g) sont répétées en un cycle.

12. Procédé selon la revendication 1, dans lequel la lentille ophtalmique est une lentille de contact.
